# EUROPEAN PATENT APPLICATION

(11) **EP 1 422 345 A1**
(43) Date of publication of application: **26.05.2004**
(21) Application number: 02078648.9
(22) Date of filing: 06.09.2002
(51) Int. Cl.: E01C 13/06, E01C 13/08, C09K 17/18, C09K 17/40, C08K 9/08, C09C 3/10

(54) **Coated sand grains**

(71) Applicant: PV-Sand A/S, 7000 Fredericia (DK)
(72) Inventor: Jensen, Victor, 7400 Herning (DK)
(74) Representative: Elmeros, Claus

(57) **Abstract**

A particulate material is disclosed consisting of sands grains coated with a thermoplastic polymer having a melt index of 20-40 g/10 min and Shore A hardness of 40-90, to provide a loose material with properties suitable for use as a surfacing composition, in particular for sports surfaces such as fields of artificial grass. A method of producing such particulate material is furthermore disclosed, in which the sand is heated to a temperature within the range of 200° to 300° C and mixed with a portion of a thermoplastic polymer, where after an amount of water is added to the mixture under continued operation of the mixer, and an airflow finally is directed through the content of the mixer so as to lower the temperature thereof.

## Description

The present invention relates to a particulate material consisting of sands grains coated with a thermoplastic polymer to provide a loose material with properties suitable for use as a surfacing composition, in particular for sports surfaces such as fields of artificial grass. The invention further relates to a method of producing such particulate material and a sports surface wherein the material is used.

### BACKGROUND

Surface compositions for sports surfaces, such as artificial grass lawns, horse running tracks or the like, are well known. Detailed standards are given for the sports surfaces to provide the correct properties for e.g. elasticity and resistance, e.g. for football plying surfaces, Fédération Internationale de Football Association (FIFA) have prepared the FIFA Quality Concept for Artificial Turf.

Synthetic turf for providing artificial grass is known from GB-A-2 348 890, in which a pile fabric is partly submerged in an infill layer of particulate material, comprising a mixture of silica sand and cryogenically ground rubber particles. The ratio of sand to rubber varies depending on the use of the artificial grass, but for football playing surfaces is it known to use a 10 mm layer of sand, covered by a 20 mm layer of rubber particles.

A drawback of this composition is that a relatively large amount of ground rubber is used, making the artificial grass costly to establish.

A sports surface comprising a pile fabric partly submerged in a layer of sand coated with a rubber is described in EP-A-0 377 925. The coating is a polymeric coating, such as an aqueous emulsion of a synthetic rubber, i.e. latex, to which the sand, heated to a temperature of about 140° C is added. Melting of a polymeric material is suggested as an alternative. The coating constitutes 0.2 to 10 % by weight of the sand, preferably 1 to 7% by weight. The sand is of a grain size of less than one millimetre and a mean dimension within the range of 250 to 850 micron.

Another method of preparing a polymer coated sand material is disclosed in EP-A-0 466 514, relating to a material for use in riding-grounds, in which the coating material is a carboxyl or anhydride containing olefin polymer and/or an oxygen containing wax. The coating material constitutes 0.1 to 10 % by weight of the sand, and the sand is heated to 100°-180°C, preferably 130°C prior to mixing with the coating. The grain size of the sand is maximal 2.36 millimetre. A wide range of suitable materials is disclosed in the application.

Yet another method is disclosed in EP-A-0 419 170, wherein sand is coated or treated with a binder comprising a free flowing extender oil with a viscosity transition below -5°F with a synthetic polymeric material dissolved or dispersed in the oil.

The object of the present invention is to provide a loose, particulate material that is less expensive than the mixture of ground rubber and sand but has comparable properties for use in particular for forming a sports surface, in particular an artificial grass field.

This object is obtained by the material according to the present invention, in which sand grains are coated with a thermoplastic polymer that has the combined properties of a relatively high melt index in the range of 20 to 40 grams per 10 minutes, and a relatively low hardness, being a Shore A hardness in the range of 40 to 90. By this uncommon combination of properties, it has been found that excellent properties of the end product are obtained, with regard to mechanical properties and wear resistance, and the product may be produced with low costs in a specially developed process in which standard manufacturing equipment can be used.

Other advantages of the present invention will be disclosed in the following description and example.

### BRIEF DESCRIPTION OF THE INVENTION

The present invention relates to a loose, particulate material consisting of silica sand grains coated with an elastomeric coating material. The silica sand is hard sand, and the most preferred type is quartz sand. By a loose, particulate material is understood a material that can be poured and in which only a few grains may be bonded together. The particulate material may, depending on the manufacturing process, consist of a fraction of particles of a size in the order of the grains, and a fraction of larger particles of an order of size of e.g. 10-20 times the diameter of the grains. The particulate material of the present invention may be one of the two fractions or a mixture thereof, and it is preferred that the material consist of the first mentioned fraction only. In a particular embodiment, the particulate material is in the form of large, loose flocks, the size of an order of size of e.g. 20-40 times the diameter of the grains.

The coating material comprises a thermoplastic polymer of a melt index of 20-40 g/10 min, preferably within the range of 25-35 g/10 min, and Shore A hardness of 40-90, preferably within the range of 50-80, most preferred within the range of 60-75. The melt index is measured as grams of melt in 10 minutes according to the test procedure defined in the ASTM standard D1238 Procedure A.

The coating material, which may comprise other ingredients than a thermoplastic polymer, e.g. wax, constitutes only a minor fraction of the material, such as 2-8 % by weight of the silica sand, preferably 4-6 % by weight of the sand. Preferably, the thermoplastic polymer comprises 2-8 % by weight of the silica sand, preferably 4-6 % by weight.

The silica sand, such as quartz sand, is in a preferred embodiment of the present invention, of an overall diameter in the range of 0.1 mm to 2 mm, preferably in the range of 0.2 mm to 1.5 mm, and most preferred in the range of 0.4 mm to 0.9 mm.

The present invention further relates to a method of producing a loose, particulate, coated bulk material, such as the one described above, the method comprising the steps of
heating a portion of silica sand to a temperature within the range of 200° to 300° C, preferably of 230° to 270°,
placing said portion of sand in a mixer comprising mixing means,
adding a portion of a thermoplastic polymer to the content of the mixer under continued operation of the mixing means,
adding a predetermined amount of water to the content of the mixer under continued operation of the mixing means, and
directing an airflow through the content of the mixer so as to lower the temperature thereof.

By heating the sand to such high temperature, a very advantageous and even distribution of the coating is obtained. By adding water to the mixture of sand and the thermoplastic polymer, a rapid cooling to just above 100°C may be obtained, whereby the distribution as well as the properties of the coating is secured. The water is dried out of the mixture by means of the airflow through the content of the mixer and the temperature is lowered further, e.g. below 80° C, preferably below 60° C, so that the coated grains are no longer mutually bonded and a loose, particulate product is obtained.

The predetermined amount of water may be 3 to 15 % by weight of the sand, preferably 5 to 10% by weight of the sand, such as from 6.5 to 8.5%.

The present invention further relates to a sports surface comprising a loose, particulate material as described above, in which the sports surface may be a riding-ground or the like, or the material may be used as part of an artificial grass lawn, comprising a pile fabric which is at least partly submerged in a layer of said loose, particulate material.

Also, the present invention relates to a method of providing a sports surface, wherein coated grains as described above are spread in a layer on a surface, in particular wherein the coated grains are spread on a pile fabric to form a layer in which the fabric is at least partly submerged.

The material is furthermore suitable for use in e.g. playgrounds as a safety surface, and it has proven to be advantageous to apply the material according to the present invention as sand blasting material for use on relatively soft surfaces as aluminium, brick facings etc. The inertia of the material is high due to the relatively high density of the sand grain, and the softer coating distributes the kinetic energy of the particle more evenly on the impact area, causing less damage to the surface whereas loose parts on the surface, such as paint or dirt, is removed efficiently.

### EXAMPLE

An example of a material according to the present invention manufactured by means of a method according to the present invention is given below.

A batch of 500 kg quartz sand of a grain size from 0.4 millimetres to 0.9 millimetres, i.e. sand that passes a sieve with 0.9 mm openings but not a sieve with 0.4 mm openings, was heated to about 250° in a pre-heating unit. When the temperature was reached, the sand was let into a mixer having a mixing container of a cylindrical inner cross-section, in which mixing means under continuous operation caused agitation of the content of the mixer. An amount of 25 kg, 5% by weight of the sand, of a thermoplastic polymer in pellets of approximately 3 millimetres diameter was added to the mixing container and the agitation by means of the mixing means was continued.
The thermoplastic polymer was an Engage® 8400 polyolefin elastomer produced by DuPont Dow Elastomer. The material is an ethylene alpha-olefin copolymer with 24% octane comonomer, a melt index of 30 g/10 minutes and a density of 0.870 g/cc. The polymer is meant for injection moulding, and the properties of the moulded material is given as a tensile yield of 1.3 MPa, a tensile elongation above 1,000, a Shore A hardness of 72, and a flexural modulus of 22 MPa and 18 MPa in tangent and secant, respectively. The Vicat softening point is given as 41°C.

After about 20 minutes, the polymer coating of the grains was considered to be homogeneous, and 37.5 litres of water, 7.5% by weight of the sand, was added to the mixing container and instantly lowered the temperature under the development of steam. After 3 minutes of agitation, an airflow of ambient air at ambient temperature of 22°C was directed through the content of the mixer, causing the water to evaporate and the steam to be ventilated out of the mixing container. The airflow was continued until the temperature of the content of the mixing container was about 60°C, where after the content was let out onto a shaking sieve with openings of 2 millimetres.

The output from the mixer consisted of a first fraction of particles of a size in the order of the grains, and a second fraction of larger particles of a diameter of 4-18 millimetres. The first fraction constituted about 90% by weight of the total weight of the content of the mixing container, and almost the entire first fraction consisted of single, coated grains. The larger particles of the second fraction may by application of a moderate pressure be transformed into large, loose flocks, the size of 10-40 millimetres in diameter, which have proven to be very suitable for horse-riding surfaces. If a higher pressure is applied to the larger particles together with a shear force, they may be transformed to particles of the first fraction.

Alternatively to the above-described batch process for producing the particulate material of the invention, a continuous process in e.g. a rotating oven could be applied.

## Claims

1. A loose, particulate material consisting of silica sand grains coated with an elastomeric coating material, wherein the coating material comprises a thermoplastic polymer having a melt index of 20-40 g/10 min and Shore A hardness of 40-90.

2. A material according to claim 1, wherein the coating material constitutes 2-8 % by weight of the silica sand, preferably 4-6 % by weight.

3. A material according to claim 1 or 2, wherein the thermoplastic polymer comprises 2-8 % by weight of the silica sand, preferably 4-6 % by weight.

4. A material according to any of claims 1-3, wherein the silica sand is of an overall diameter in the range of 0.1 mm to 2 mm, preferably in the range of 0.2 mm to 1.5 mm, and most preferred in the range of 0.4 mm to 0.9 mm.

5. A material according to any of the preceding claims, wherein the melt index is 25-35 g/10 min.

6. A material according to any of the preceding claims, wherein the Shore A hardness is 50-80, preferably 60-75.

7. Method of producing a loose, particulate, coated bulk material, comprising the steps of
heating a portion of silica sand to a temperature within the range of 200° to 300° C,
placing said portion of sand in a mixer comprising mixing means,
adding a portion of a thermoplastic polymer to the content of the mixer under continued operation of the mixing means,
adding a predetermined amount of water to the content of the mixer under continued operation of the mixing means, and
directing an airflow through the content of the mixer so as to lower the temperature thereof.

8. A method according to claim7, wherein airflow is continued until the temperature of the content of the mixer is below 80° C, preferably below 60° C.

9. A method according to claim 7 or 8, wherein the predetermined amount of water is 3 to 15 % by weight of the sand, preferably 5 to 10% by weight of the sand.

10. A method according to any of claims 7 to 9, wherein the thermoplastic polymer has a melt index of 20-40 g/10 min and Shore A hardness of 40-90.

11. A method according to any of claim 7 to 10, wherein the thermoplastic polymer comprises 2-8 % by weight of the silica sand, preferably 4-6 % by weight.

12. A method according to any of claims 7-11, wherein the silica sand is of an overall diameter in the range of 0.1 mm to 2 mm, preferably in the range of 0.2 mm to 1.5 mm, and most preferred in the range of 0.4 mm to 0.9 mm.

13. A method according to any of claims 7-12, wherein the melt index is 25-35 g/10 min.

14. A method according to any of claims 7-13, wherein the Shore A hardness is 50-80, preferably 60-75.

15. A sports surface comprising a loose, particulate material according to any of claims 1-6.

16. A sports surface according to claim 15, further comprising a pile fabric which is at least partly submerged in a layer of said loose, particulate material.

17. A method of providing a sports surface, wherein coated grains according to any of claims 1 to 6 are spread in a layer on a surface.

18. A method according to claim 17, wherein the coated grains are spread on a pile fabric to form a layer in which the fabric is at least partly submerged.
